# EUROPÄISCHE PATENTSCHRIFT

(11) **EP 2 732 519 B1**
(45) Veröffentlichungstag und Bekanntmachung des Hinweises auf die Patenterteilung: **10.01.2018**
(21) Anmeldenummer: 12735267.2
(22) Anmeldetag: 06.07.2012
(51) Int. Cl.: H02G 11/00, H02G 11/02

(54) **LEITUNGSFÜHRUNGSSYSTEM**
LINE GUIDING SYSTEM
SYSTÈME DE GUIDAGE DE CÂBLES

(30) Priorität: 11.07.2011 DE 202011103263 U
(43) Veröffentlichungstag der Anmeldung: 21.05.2014
(73) Patentinhaber: Igus GmbH, 51127 Köln (DE)
(72) Erfinder: HERMEY, Andreas, 53773 Hennef (DE); DUFF, Robb, 53809 Ruppichteroth (DE); SCHLÖGEL, Frank, 50859 Köln (DE)
(74) Vertreter: Lippert Stachow Patentanwälte Rechtsanwälte
(86) Internationale Anmeldenummer: PCT/EP2012/063245
(87) Internationale Veröffentlichungsnummer: WO 2013/007631

(56) Entgegenhaltungen:
- EP-A2- 0 460 667
- DE-U1- 7 732 412
- JP-A- S55 119 670
- JP-A- 2009 044 809

## Beschreibung

Die Erfindung betrifft Leitungsführungssystem zur Aufnahme und Führung von Versorgungsleitungen zwischen zwei in einer Kreisbewegung bezüglich einer Drehachse über einen Drehwinkelbereich relativ zueinander beweglichen Anschlusspunkten, wobei das Leitungsführungssystem einen mit den Anschlusspunkten gekoppelten länglichen Strang aufweist, an oder in dem die Versorgungsleitungen geführt anordenbar sind, und der Strang unter Ausbildung eines ersten Trums, eines zweiten Trums und eines das erste und zweite Trum miteinander verbindenden Umlenkbogens über einen Kreisbogen geführt innerhalb des Drehwinkelbereich hin und her verfahrbar ist, wobei mindestens zwei Stränge, ein erster Strang und ein zweiter Strang, vorgesehen sind, die hintereinander gekoppelt angeordnet sind, die Anschlusspunkte der Stränge bezüglich einer Abfolgerichtung von dem ersten Strang zu dem zweiten Strang hin als vorderer Anschlusspunkt und hinterer Anschlusspunkt ausgebildet sind, wobei der hintere Anschlusspunkt des ersten Strangs ortsfest zu dem vorderen Anschlusspunkt des zweiten Strangs angeordnet ist und zur Führung der Stränge ein Führungssystem mit drei bezüglich der Drehachse relativ zueinander drehbewegbaren Führungseinheiten, bezüglich der Abfolgerichtung eine vordere Führungseinheit, eine mittlere Führungseinheit und eine hintere Führungseinheit, vorgesehen ist, wobei an der vorderen Führungseinheit der vordere Anschlusspunkt des ersten Strangs, an der mittleren Führungseinheit der hintere Anschlusspunkt des ersten Strangs und der vordere Anschlusspunkt des zweiten Strangs und an der hinteren Führungseinheit der hintere Anschlusspunkt des zweiten Strangs festgelegt ist.

Ein Problem bei derartigen Leitungsführungssystemen ist ein häufig zu geringer Drehwinkelbereich. Dieser kann zwar bei neueren Leitungsführungssystemen mittels eines Strangs mit rückwärtigem Biegeradius, d.h. bei einer möglichen Biegung des Strangs in zwei Richtungen, auf bis zu 600° erweitert werden. Dies kann jedoch in der Verwendung bestimmter Maschinen, wie Windkraftanlagen und Schwimmkränen, noch zu gering sein. Zur Erweiterung des Drehwinkelbereichs könnten elektrische Leitungen über Kontaktringe und Schleifkontakte übertragen werden, wobei jedoch bekannte Übertragungsprobleme, beispielsweise infolge mangelnden elektrischen Kontakts oder einwirkender Feuchtigkeit auftreten können, die unter Umständen sogar eine aufwendige Kapselung der Kontaktringe und Schleifkontakte notwendig machen.
Die JP 2009 044809 A und JP S55 119670 A offenbaren jeweils ein gattungsgemäßes Leitungsführungssystem mit einer inneren Führungseinheit, mittleren Führungseinheit und einer äußeren Führungseinheit, in denen zwei hintereinander gekoppelte jeweils über einen Umlenkbogen verfahrbare Stränge angeordnet sind.
Aus der EP 0 460 667 A2 ist ein Leitungsführungssystem mit mindestens zwei um eine Drehachse ein- und ausdehnbare spiralförmigen Leitungssträngen bekannt.
Der DE 77 32 412 U1 ist ein Leitungsführungssystem mit einem stationären Führungszylinder und einem Rollen gestützten Drehgestell mit Mitnehmer entnehmbar, wobei gegenläufige Stränge über Umlenkrollen geführt und vorgespannt angeordnet sind.
Aufgabe der Erfindung ist, ein gattungsgemäßes Leitungsführungssystem bereitzustellen, das kompakt aufgebaut ist.
Die gestellte Aufgabe wird erfindungsgemäß durch die Merkmale des Anspruches 1 gelöst. Vorteilhafte Weiterbildungen werden in den Unteransprüchen beschrieben. Die gestellte Aufgabe wird bereits dadurch gelöst, dass die Führungseinheiten in zwei axial beabstandeten Ebenen, das heißt einer ersten Ebene und einer zweiten Ebene, senkrecht zur Drehachse angeordnet sind.

Infolge der Hintereinanderankopplung oder seriellen Ankopplung der Stränge addieren sich die einzelnen Drehwinkelbereiche der Stränge zu einem Gesamtdrehwinkelbereich, sodass dieser beispielsweise in Verwendung eines rückwärtigen Biegeradius jeweils bei den Strängen gegenüber den bekannten Leitungsführungssystemen auf bis zu 1200° erweitert werden kann. Es können auch mehrere Stränge "in Reihe", d.h. hintereinander aneinander angekoppelt, kaskadenartig hintereinander oder seriell angeordnet sein, sodass sich deren einzelnen Drehwinkelbereiche hinsichtlich der Drehwinkelbereiche zu einem Gesamtdrehwinkelbereich aufsummieren. Der erste Strang kann in einer Abfolgerichtung von dem ersten Strang zu dem zweiten Strang hin vorn mit dem einen beweglichen Anschlusspunkt und der zweite Strang kann in der Abfolgerichtung hinten mit dem anderen beweglichen Anschlusspunkt verbunden sein. Die Versorgungsleitungen können in der Abfolgerichtung in den Strängen geführt angeordnet sein. Die in den Strängen zu führenden Versorgungsleitungen können somit an einem der relativ zueinander beweglichen Anschlusspunkte in den ersten Strang eingeleitet, in dem ersten Strang zu dessen Ende geführt, dort an den zweiten Strang übergeben und zu dessen Ende geführt angeordnet sein. An diesem Ende kann der andere der relativ zueinander beweglichen Anschlusspunkte angeordnet sein. Hierzu können die Strangenden, an denen der Übergang von dem ersten Strang zu dem zweiten Strang erfolgt, ortsfest zueinander angeordnet sein.

Der Umlenkbogen der einzelnen Stränge kann eine Biegeachse parallel zur Drehachse aufweisen. Die Stränge können über ihren jeweiligen Umlenkbogen bezüglich der Drehachse gleichsinnig verfahrbar angeordnet sein. Die Umlenkbögen der Stränge können somit bezüglich der Drehachse in gleiche Umfangsrichtung oder in gleichem Drehsinn geöffnet angeordnet sein. Die Krümmungsradien der Umlenkbögen können bezüglich der Drehachse in die gleiche Umfangsrichtung weisen.
Die Stränge können bezüglich der Drehachse radial oder axial beabstandet zueinander angeordnet sein. Es können, wie weiter unten näher beschrieben, auch mehrere hintereinander gekoppelte Stränge vorgesehen sein, die bezüglich der Drehachse radial und/oder axial beabstandet zueinander angeordnet sind. Somit kann das Leitungsführungssystem sogar eine Vielzahl von Strängen aufweisen, von denen zwei oder mehrere bezüglich der Drehachse radial voneinander beabstandet sind und in Reihe mit einer Gruppe von weiteren axial von ihnen beabstandeten Strängen verbunden sind, die ihrerseits hintereinander gekoppelt sind. Es sind somit beliebige Kombinationen von hintereinander angeordneten Strängen denkbar, die einzeln oder in Gruppen bezüglich der Drehachse radial und/oder axial beabstandet zueinander angeordnet sind.

Die Anschlusspunkte der Stränge sind bezüglich der Abfolgerichtung als vorderer Anschlusspunkt und hinterer Anschlusspunkt ausgebildet. Zur seriellen Ankopplung der Stränge ist der hintere Anschlusspunkt des ersten Strangs ortsfest zu dem vorderen Anschlusspunkt des zweiten Strangs angeordnet. Die in den Strängen zu führenden Versorgungsleitungen können somit an den vorderen Anschlusspunkt des vorderen Stranges in denselben eingeführt, in dem ersten Strang zu dessen hinteren Anschlusspunkt geführt, dort in dem vorderen Anschlusspunkt des zweiten Stranges an denselben übergeführt und zu dessen hinteren Anschluss geführt angeordnet sein. An dem hinteren Anschlusspunkt des zweiten Strangs können die Versorgungsleitungen aus demselben herausgeführt angeordnet sein. Anschließend können die Versorgungsleitungen an den vorderen Anschlusspunkt eines dritten Stranges in denselben eingeführt werden, der seriell an den zweiten Strang anschließt. Es kann der hintere Anschlusspunkt des ersten Strangs unmittelbar an den vorderen Anschlusspunkt des zweiten Strangs angreifen. Es ist jedoch insbesondere wegen der Ausbildung des Umlenkbogens des jeweiligen Stranges konstruktiv vorteilhaft, wenn die beiden Anschlusspunkte beabstandet und ortsfest zueinander angeordnet sind.

Das Leitungsführungssystem weist zur Führung der Stränge ein Führungssystem mit drei bezüglich der Drehachse relativ zueinander drehbewegbaren Führungseinheiten auf. Diese Führungseinheiten werden bezüglich der Abfolgerichtung als vordere Führungseinheit, mittlere Führungseinheit und hintere Führungseinheit bezeichnet. Hierbei ist an der vorderen Führungseinheit der vordere Anschlusspunkt des ersten Strangs, an der mittleren Führungseinheit der hintere Anschlusspunkt des ersten Strangs und der vordere Anschlusspunkt des zweiten Strangs und an der hinteren Führungseinheit der hintere Anschlusspunkt des zweiten Strangs festgelegt. Somit können der erste Strang über eine Drehbewegung der vorderen Führungseinheit relativ zu der mittleren Führungseinheit und der zweite Strang über eine Drehbewegung der mittleren Führungseinheit relativ zu der hinteren Führungseinheit über ihren jeweiligen Drehwinkelbereich so verfahren werden, dass sich die jeweiligen Drehwinkelbereiche aufsummieren. Die Führungseinheiten können jeweils rotationssymmetrisch zur Drehachse ausgebildet sein.
Vorzugsweise ist die vordere Führungseinheit bezüglich einer Basis ortsfest angeordnet. Damit können die mittlere Führungseinheit und die hintere Führungseinheit bezüglich der Basis drehbeweglich angeordnet sein. Hierzu ist eine Lagerung der mittleren und hinteren Führungseinheit mit axial und/oder radial wirksamen Lagerelementen von Vorteil, wobei die Lagerung als Gleitlagerung oder, bevorzugt, als Rolllagerung ausgebildet sein kann.

Zur Führung der Trume jeweils auf einem Kreisbogen können die Führungseinheiten kreisringartig mit jeweils einer kreisförmigen umfänglichen Anlagefläche und einer kreisförmigen radialen Anlagefläche für ein zugeordnetes Trum und zur Anlagerung des diesem Trum zugeordneten Anlagepunkt ausgebildet sein. Die Flächennormale der umfänglichen Anlagefläche kann radial zur Drehachse und die Flächennormale der radialen Anlagefläche in Richtung der Drehachse weisen. Aus der Geometrie ergibt sich, dass die umfängliche Anlagefläche kreisbogenförmig gebogen ist bzw. eine kreismantelzylindrische Form aufweist, während die radiale Anlagefläche von der Form gleich einer Stirnfläche eines Hohlzylinders ist. Bei einer üblichen Anordnung des Leitungsführungssystems mit zumindest in etwa senkrecht angeordneter Drehachse kann die radiale Anlagefläche zur Auflagerung des jeweils zugeordneten Trums dienen, während das Trum an der kreisförmig gebogenen umfänglichen Anlagefläche unter Annahme einer Kreisbogenform anliegt. Damit ist das jeweilige Trum auch beim Verfahren in einer Ruhelage ohne Relativbewegung zu den Anlageflächen an denselben angeordnet, sodass keine ungünstige Reibung zwischen Trume und Anlageflächen entstehen kann. Beim Verfahren entsteht lediglich im Bereich des Umlenkbogens eine Reibungskräfte erzeugende Relativbewegung des Stranges mit den zugeordneten Anlageflächen.

Die für die beiden Trume eines Strangs vorgesehenen Anlageflächen können koaxial zueinander und radial beabstandet zueinander angeordnet sein. Hierbei können die umfänglichen Anlageflächen für die beiden Trume des Strangs radial zueinander weisen, während die radiale Anlagefläche zweckmäßig in einer radialen Ebene angeordnet sind, damit kein axialer Höhenunterschied beim Verfahren des Strangs für denselben zu überwinden ist. Vorzugsweise grenzen die beiden umfänglichen Anlageflächen über einen Ringspalt aneinander. Damit wird gewährleistet, dass die Führungseinheiten sich umfänglich nicht berühren und damit nicht ihre relative Drehbeweglichkeit zumindest teilweise einbüßen können.
Die umfänglichen und radialen Anlageflächen, die für die beiden Trume eines Strangs vorgesehen sind, können somit eine Führungsrinne für diesen Strang begrenzen, sodass der Strang geschützt in dieser Führungsrinne fahrbar ist. Da die Führungsrinne von den beiden kreisartig gebogenen Anlageflächen begrenzt werden kann, kann der Strang zur Anlage beider Trume an die jeweils zugeordnete Anlagefläche den oben beschriebenen rückwärtigen Biegeradius aufweisen. Es können Abdeckelemente zur Abdeckung der Führungsrinne bzw. Führungsrinnen vorgesehen sein.
Die radiale Anlagefläche und umfängliche Anlagefläche einer Führungseinheit können unter Ausbildung eines L-förmigen Profils aneinander festgelegt sein. In dem weiter unten detaillierter beschriebenen Fall der Anordnung der Führungseinheiten in einer gemeinsamen Ebene können die Anlageflächen der mittleren Führungseinheit mit den beiden anderen Führungseinheiten jeweils einen in dieser Ebene liegenden Führungskanal ausbilden. Hierzu kann die mittlere Führungseinheit ein T-Profil mit einem die umfänglichen Anlageflächen aufweisenden Stammsteg und einem die radialen Anlageflächen bildenden Quersteg aufweisen.
Vorzugsweise ist der Anschlusspunkt eines Trums jeweils an der diesem Trum zugeordneten radialen Anlagefläche festgelegt. Die vordere Führungseinheit kann auf der Basis lagefixiert sein. Erfindungsgemäß sind die Führungseineinheiten in zwei axial beabstandeten Ebenen senkrecht zur Drehachse angeordnet. Dabei kann in einer ersten Ebene die vordere Führungseinheit und in einer zweiten zur ersten Ebene beabstandeten Ebene die hintere Führungseinheit angeordnet sein. Die mittlere Führungseinheit kann in Überbrückung der axialen Beabstandung der Ebenen in beiden Ebenen angeordnet sein. Hierzu kann der erste Anschlusspunkt des ersten Strangs in der ersten Ebene und der vordere Anschlusspunkt des zweiten Strangs in der zweiten Ebene an der mittleren Führungseinheit festgelegt angeordnet sein. Damit können die vordere Führungseinheit und die mittlere Führungseinheit in der ersten Ebene die Führungsrinne für den ersten Strang und die mittlere Führungseinheit mit der hinteren Führungseinheit in der zweiten Ebene die Führungsrinne für den zweiten Strang ausbilden. Die zu führenden Versorgungsleitungen können zur Überbrückung des axialen Abstandes zwischen dem zweiten Abschlusspunkt des ersten Stranges und des ersten Anschlusspunkt des zweiten Stranges an der mittleren Führungseinheit lagefixiert beispielsweise in einem Führungsrohr angeordnet sein. In Umkehrung der Anordnung können die vordere Führungseinheit und die hintere Führungseinheit in der ersten Ebene bzw. in der zweiten Ebene radial innen angeordnet sein, während sich die mittlere Führungseinheit radial außen über beide Ebenen erstrecken kann.

Allgemein erlauben dieser systematische Aufbau der Führungseinheiten und deren Anordnung in dem Leitungsführungssystem, die einzelnen Führungseinheiten in einer Modulbauweise zusammenzusetzen. Hierbei können, bei einer Anordnung der Führungseinheiten in zwei Ebenen, die vordere und hintere Führungseinheit, die bei Anordnung in zwei axial beabstandeten Ebenen übereinander angeordnet werden, jeweils als zumindest etwa gleiches Bauteil gefertigt werden. Die die beiden Ebenen überbrückende mittlere Führungseinheit kann eine Teilungsebene senkrecht zur Drehachse aufweisen, die sie in zwei Hälften, eine untere und eine obere Hälfte, teilt, wobei diese Hälften zumindest etwa baugleich sein können. Die Hälften können beispielsweise über eine Steck- oder Rast-Steckverbindung drehfest miteinander verbindbar sein.

Auch im Falle der beiden vorgesehenen axial beabstandeten Ebenen für die Führungseinheiten kann die vordere Führungseinheit an der Basis lagefixiert sein. Die mittlere Führungseinheit kann an der Basis und die hintere Führungseinheit kann auf der vorderen Führungseinheit vorzugsweise drehbeweglich angelagert sein. Zusätzlich kann die mittlere Führungseinheit in der zweiten Ebene vorzugsweise drehverschieblich, insbesondere gleitdrehverschieblich an der Basis angelagert sein.

Die Modulbauweise kann in Bezug auf die Anordnung der Führungseinheiten in einer gemeinsamen Ebene dahingehend modifiziert werden, in dem die einzelnen Führungseinheiten als einzelne Module ausgeführt sind, die bezüglich der Ebenen nebeneinander und/oder übereinander anordenbar sind. Werden beispielsweise in zwei axial voneinander beabstandeten Ebenen jeweils drei Führungseinheiten vorgesehen, von denen beispielsweise die vordere Führungseinheit der ersten Ebene radial außen angeordnet ist, so kann die Beabstandung der beiden Ebenen über die hier radial innen angeordnete hintere Führungseinheit überbrückt werden, indem auf diese hintere Führungseinheit eine zweite hintere Führungseinheit drehfest aufgesteckt wird, die dann in der zweiten Ebene angeordnet ist. Die mittlere Führungseinheit der zweiten Ebene kann drehbeweglich über der mittleren Führungseinheit der ersten Ebene angeordnet sein. Entsprechend kann die hintere Führungseinheit der zweiten Ebene drehbeweglich über der hinteren Führungseinheit der ersten Ebene angeordnet sein. Entsprechend der ersten Ebene können die Führungseinheiten in der zweiten Ebene jeweils mit der benachbarten Führungseinheit eine Führungsrinne für einen dritten Strang bzw. vierten Strang bilden, wobei der dritte Strang in der zweiten Ebene zwischen der hinteren Führungseinheit und mittleren Führungseinheit und der vierte Strang in der zweiten Ebene zwischen der mittleren Führungseinheit und der vorderen Führungseinheit angeordnet sind. Somit kann mit Anordnung von vier Strängen der mögliche Verdrehwinkelbereich gegenüber dem Stand der Technik vervierfacht werden.
Es liegt auf der Hand, dass dieses System um weitere axial voneinander beabstandeten Ebenen unter entsprechender Vergrößerung des Drehwinkelbereichs erweitert werden kann, wobei, in Bezug auf das oben beschriebene Beispiel mit zwei Ebenen der axiale Abstand zwischen der zweiten Ebene und einer dritten Ebene über die radial außen liegende Führungseinheit und die Beabstandung zwischen der dritten und einer vierten Ebene über die radial innen liegende Führungseinheit überbrückt werden können.

Entsprechend kann dem Leitungsführungssystem in Erweiterung des Drehwinkelbereichs von lediglich in einer Ebene angeordneten Führungseinheiten den oben beschriebenen drei Führungseinheiten eine weitere Führungseinheit radial innen oder radial außen zugefügt werden. Ob die weitere Führungseinheit radial innen oder außen angeordnet werden soll, hängt letztlich von zweckdienlichen Erwägungen ab: Ist beispielsweise eine radial innen liegende Führungseinheit ortsfest mit der Basis verbunden, so kann in Erweiterung des Leitungsführungssystems eine radial außen liegende Führungseinheit hinzugefügt werden.

Die Drehwinkelbereiche der einzelnen Stränge können anschlagsbegrenzt und/oder antriebsbegrenzt sein. Hierzu kann beispielsweise im Falle einer Anschlagsbegrenzung vorgesehen sein, dass, nachdem die hintere Führungseinheit über den Drehwinkelbereich des zweiten Strangs verfahren ist, der Mitnehmer an der mittleren Führungseinheit anschlägt. Daraufhin kann bei weiterer Drehung die mittlere Führungseinheit mit der hinteren Führungseinheit mitführt werden, bis auch das Ende des Drehwinkelbereichs des ersten Strangs erreicht ist, der durch einen Anschlag begrenzt werden kann. Insbesondere bei Leitungsführungssystemen für größeren Maschinen ist es von Vorteil, wenn die einzelnen drehbeweglichen Führungseinheiten motorgesteuert bzw. getriebegesteuert angetrieben werden. Vorteilhaft zum gleichmäßigen Verfahren der Stränge kann die Winkelgeschwindigkeit, mit der die hintere Führungseinheit angetrieben wird, doppelt so groß sein wie die Winkelgeschwindigkeit, mit der die mittlere Führungseinheit angetrieben wird. Diese unterschiedlichen Winkelgeschwindigkeiten können beispielsweise über ein Getriebe erzielt werden. Zur Begrenzung des Drehwinkelbereichs kann beispielsweise am Motor ein vorzugsweise inkrementaler oder absoluter Winkelgeber vorgegeben sein. Dieser Winkelgeber kann gleichzeitig zur Steuerung oder Regelung der Drehung der Führungseinheiten eingesetzt werden. Insbesondere bei baulich kleinen Leitungsführungssystemen kann zur Drehwinkelbereichsbegrenzung vorgesehen sein, dass die Stränge selbst den Drehwinkelbereich begrenzen, indem sie in ausgefahrener Position so gespannt sind, dass sie ein weiteres Verfahren blockieren.

Vorteilhaft kann zumindest für einen Strang ein Abstandskörper zur Beabstandung seiner Trume vorgesehen sein. Der Abstandskörper kann hierzu vorzugsweise mit Spiel zwischen den Trumen und innenseitig des Umlenkbogens angeordnet sein. Ferner kann er mit der Bewegung des Umlenkbogens beim Verfahren des Strangs gekoppelt sein. Vorzugsweise ist der Abstandskörper rollverschieblich oder bevorzugt gleitverschieblich auf den radialen Anlageflächen für das erste und zweite Trum des jeweiligen Strangs angeordnet. Vorteilhaft kann die Gleitpaarung Trum/radiale Anlageflächen und/oder Äbstandskörper/radiale Anlageflächen, beispielsweise mittels geschliffener und/oder beschichteter Anlageflächen oder mittels Gleitvorsprüngen, mit verminderter Gleitreibung ausgelegt sein. Der Abstandskörper kann unterseitig mit den Gleitvorsprüngen ausgebildet sein, an denen er sich in Einbaulage an den radialen Anlageflächen abstützen kann.

In einer bevorzugten Ausbildung des Leitungsführungssystems sind zwei erste Stränge und/oder zwei zweite Stränge vorgesehen, wobei die ersten Stränge bzw. die zweiten Stränge jeweils in einer gleichen Ebene und in dieser gegenläufig zueinander verfahrend angeordnet sind. Bevorzugt sind die ersten Stränge und/oder die zweiten Stränge jeweils gleich ausgebildet. Damit wird praktisch die Querschnittsmenge an Versorgungsleitungen verdoppelt, ohne dass die Bauhöhe des Leitungsführungssystems geändert werden muss. Damit können die Umlenkbögen der ersten Stränge bzw. der zweiten Stränge in einem umfänglichen Abstand zueinander angeordnet sei, der über den Drehwinkelbereich zumindest in etwas konstant bleibt. Daher ist es hier besonders vorteilhaft, beispielsweise für die beiden ersten Stränge einen Abstandskörper vorzusehen, der sich über die gesamte Länge der Trume der beiden ersten Stränge erstreckt und in den beiden Umlenkbogen der ersten Stränge gleitverschieblich anliegt. Damit kann über den gesamten Drehwinkelbereich ein vorschriftsgemäßes Anliegen der Trume an der ihnen jeweils zugeordneten umfänglichen Anlagefläche und ein ordnungsgemäßer Verlauf der Umlenkbögen gewährleistet werden.

Um nicht den zugeordneten Strang mechanisch zu belasten, kann der Abstandskörper in der jeweiligen Führungsrinne geführt angeordnet sein. Hierzu kann er unterseitig einen Führungsvorsprung aufweisen, der sich vorzugsweise kreisbogenartig über den Abstandskörper erstreckt und in Einbaulage in eine in der Führungsrinne vorgesehene Führungsnut eingreift. Vorzugsweise dient der Ringspalt zwischen den Führungseinheiten als Führungsnut.

Der Abstandskörper kann kreisringartig mit einer Öffnung vorgesehen sein, deren umfängliche Dimensionierung über die Beabstandung der beiden Umlenkbögen bestimmt wird. Damit der Abstandskörper störunanfällig über den Drehwinkelbereich zwischen den Trumen verfahren werden kann, ohne beispielsweise zu verkanten, wird vorgeschlagen, den Abstandskörper als Kette mit Kettengliedern auszubilden, die jeweils einen an die zugeordnete der zugeordneten Führungsrinne angepassten Kreisbogenabschnitt bilden und die parallel zur Drehachse verschwenkbar zueinander in dem Leitungsführungssystem angeordnet sind. Die Kettenglieder können hierbei so verschwenkbar zueinander angeordnet sein, dass sie in eine Form mit dem oben beschriebenen rückwärtigen Biegeradius schwenkbar sind.

Das Leitungsführungssystem kann eine Anschlussvorrichtung zu ihrem Einbau oder Anschluss in bzw. an einen Maschinenaufbau und/oder zur Abstützung einer Aufkonstruktion oder Aufbaus des Maschinenaufbaus aufweisen. Hierbei kann der Aufbau vorzugsweise ortsfest mit dem hinteren Anschlusspunkt des zweiten Strangs verbunden sein. Vorzugsweise ist der Aufbau drehfest mit der hinteren Führungseinheit verbunden. Hierzu können als Teil der Anschlussvorrichtung Stützelemente, beispielsweise in Form von Konsolen, zur Abstützung des Aufbaus an dem Leitungsführungssystem oder Anschlusselemente, wie Flansche, zum Befestigen des Leitungsführungssystems an den Maschinenaufbau vorgesehen sein.

Die vorliegende Erfindung wird im Folgenden anhand mehrerer in einer Zeichnung dargestellten Ausführungsformen des Leitungsführungssystems näher erläutert. In der Zeichnung zeigen:
- Fig. 1:: eine perspektivische Draufsicht auf ein gattungsgemäßes Leitungsführungssystem

- Fig. 2:: eine Draufsicht auf das Leitungsführungssystem gemäß Fig. 1,
- Fig. 3:: eine Längsschnittdarstellung gemäß dem Längsschnittsverlauf A-A in Fig. 2,
- Fig. 4:: eine perspektivische Draufsicht auf eine erste Ausführungsform des Leitungsführungssystems,
- Fig. 5:: eine seitliche Explosionsansicht der ersten Ausführungsform des Leitungsführungssystems gemäß Fig. 4,
- Fig. 6:: eine Seitenansicht der ersten Ausführungsform des Leitungsführungssystems gemäß Fig. 5 mit eingezeichneten Querschnittsverläufen,
- Fig. 7:: eine Querschnittsansicht gemäß dem Querschnittsverlauf B-B gemäß Fig. 6,
- Fig. 8:: eine Querschnittsansicht gemäß dem Querschnittsverlauf C-C gemäß Fig. 6,
- Fig. 9:: eine Längsschnittansicht gemäß dem Längsschnittverlauf D-D in Fig. 8,
- Fig. 10:: eine perspektivische Draufsicht auf eine zweite Ausführungsform des Leitungsführungssystems,
- Fig. 11:: eine seitliche Explosionsansicht der zweiten Ausführungsform des Leitungsführungssystems gemäß Fig. 10,
- Fig. 12:: eine Seitenansicht der zweiten Ausführungsform des Leitungsführungssystems gemäß Fig. 10 mit eingezeichneten Querschnittsverläufen,
- Fig. 13:: eine Querschnittsansicht gemäß dem Querschnittsverlauf E in Fig. 12,
- Fig. 14:: eine Querschnittsansicht gemäß dem Querschnittsverlauf F-F in Fig. 12,
- Fig. 15:: eine Längsschnittsansicht gemäß dem Schnittverlauf G-G in Figur 14,
- Fig. 16:: eine perspektivische Draufsicht auf eine Maschinenanlage mit einer dritten Ausführungsform des Leitungsführungssystem dem Leitungsführungssystem,
- Fig. 17:: eine Querschnittsansicht gemäß dem Querschnittsverlauf H-H in Fig. 16 mit Draufsicht auf das Leitungsführungssystem und
- Fig. 18:: eine Querschnittsansicht gemäß dem Querschnittsverlauf I-I in Fig. 17.

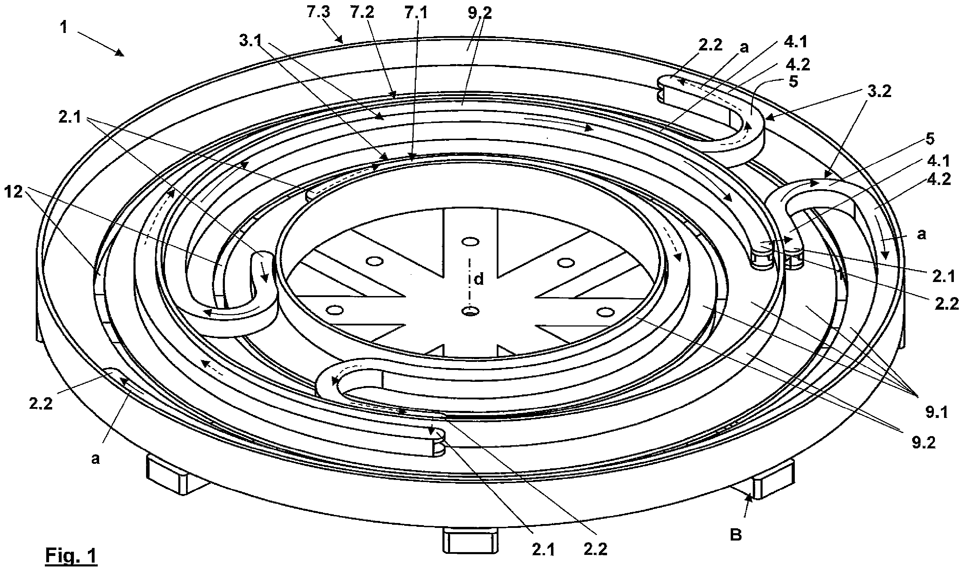

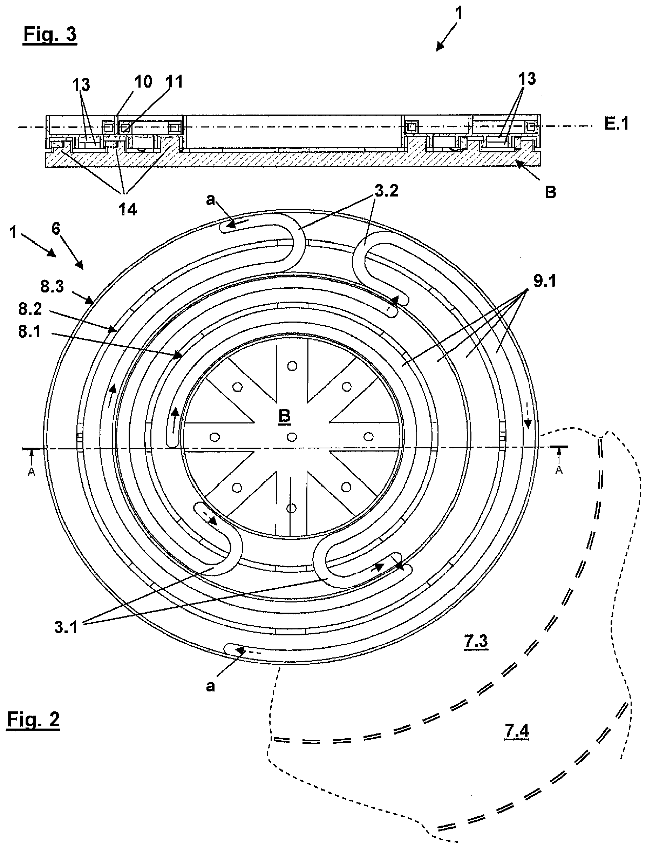

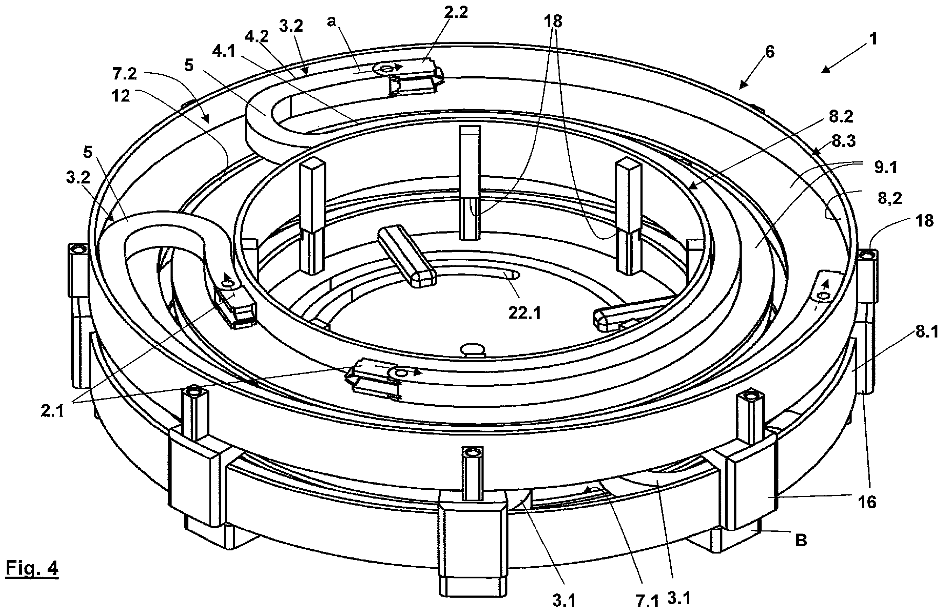

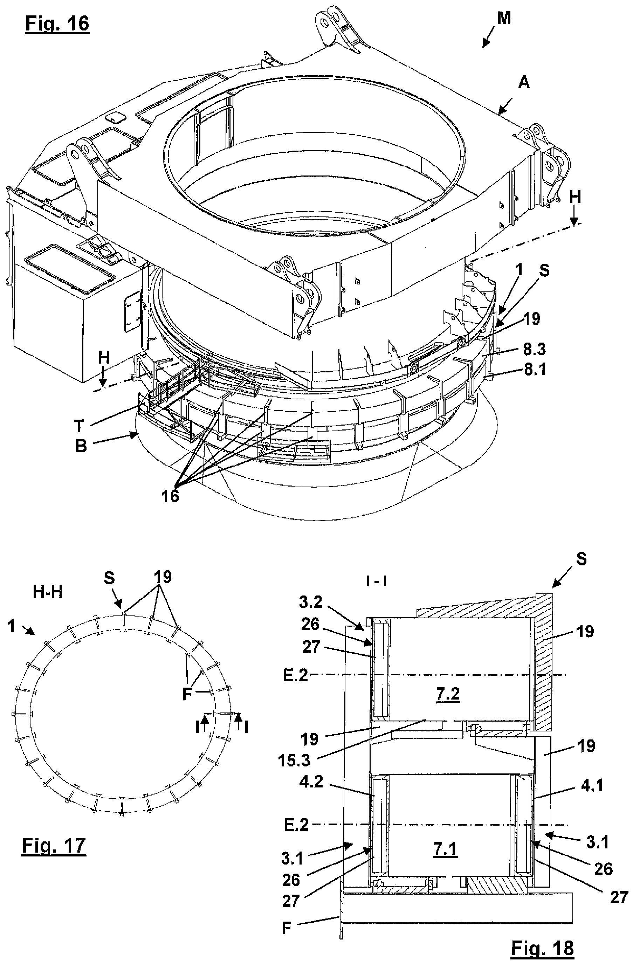

In den Figuren 4 bis 15 werden in verschiedenen Ansichten und Schnittdarstellungen zwei unterschiedliche Ausführungsformen eines Leitungsführungssystems 1 gezeigt. Eine dritte Ausführungsform des Leitungsführungssystems 1 ist in den Figuren 16 bis 18 in seiner Verwendung in einer Maschinenanlage M dargestellt. In den Figuren 1 bis 3 wird ein gattungsgemäßes Leitungsführungssystem dargestellt. Das Leitungsführungssystem 1 ist zur Aufnahme und Führung von hier nicht dargestellten Versorgungsleitungen zwischen zwei in einer Kreisbewegung bezüglich einer Drehachse d über einen Drehwinkelbereich relativ zueinander beweglichen Anschlusspunkten 2.1, 2.2 ausgelegt. Das Leitungsführungssystem 1 weist in den hier gezeigten Ausführungsformen jeweils zwei erste Stränge 3.1 und zwei zweite Stränge 3.2 auf, wobei die ersten Stränge 3.1 parallel zueinander angeordnet sind. Sie sind gegensinnig zur Drehachse verfahrbar. In gleicher Weise sind die zweiten Stränge 3.2 parallel zueinander angeordnet. Die ersten Stränge 3.1 sind jedoch bezüglich des jeweils zugeordneten zweiten Stranges 3.2 hintereinander gekoppelt oder seriell angeordnet. Die zugeordneten Stränge 3.1, 3.2 sind in einer Abfolgerichtung a von dem ersten Strang 3.1 zu dem zweiten Strang 3.2 aneinandergekoppelt. Ein erster Strang 3.1 "übergibt" die in ihm geführten Versorgungsleitungen an den ihm zugeordneten zweiten Strang 3.2.Hierbei sind die seriell bzw. hintereinander angeordneten Stränge 3.1, 3.2 bezüglich der Drehachse d gleichsinnig zueinander verfahrbar angeordnet.
Alle Stränge 3.1, 3.2 sind unter Ausbildung eines ersten Trums 4.1 und eines zweiten Trums 4.2 sowie unter Ausbildung eines das erste Trum 4.1 und zweite Trum 4.2 verbindenden Umlenkbogens 5 über einen Kreisbogen innerhalb des Drehwinkelbereichs hin und her verfahrbar. Die hintereinander angeordneten Stränge 3.1, 3.2 sind gleichsinnig über ihren jeweiligen Umlenkbogen 5 verfahrbar angeordnet. Die Umlenkbögen der seriell bzw. hintereinander angeordneten Stränge 3.1, 3.2 sind bezüglich der Drehachse d in einer gleichen Umfangsrichtung geöffnet angeordnet. Entsprechend weist jeder Strang 3.1, 3.2 zwei Anschlusspunkte auf, die hier bezüglich der Abfolgerichtung a als vorderer Anschlusspunkt 2.1 und hinterer Anschlusspunkt 2.2 bezeichnet sind. Diese Abfolgerichtung a ist beispielsweise mittels kleiner Pfeile in Fig. 1 eingezeichnet, die eine perspektivische Draufsicht auf eine erste Ausführungsform des Leitungsführungssystems 1 zeigt. In der Fig. 1 wie auch den Figuren 2-4, 7, 8, 10, 13 und 14 ist jeweils ein vorgesehenes ringförmiges Deckelelement entfernt, um Einblick in den Verlauf der Stränge 3.1, 3.2 zu erlauben. Da hier zwei erste Stränge 3.1 und zwei zweite Stränge 3.2 vorgesehen sind, die jeweils zu Paaren aus einem ersten Strang 3.1 und einem zweiten Strang 3.2 zusammengefasst hintereinander gekoppelt angeordnet sind, ist die Abfolgerichtung für eine dieser Paarungen mit durchgezogenem Pfeil und für die andere Paarung mit gestricheltem Pfeil in den Figuren 1 und 2 eingetragen. Ferner sind hier, wie auch in den übrigen Figuren, lediglich die wesentlichen Bauteile und diese auch sehr vereinfacht ohne konstruktive Details wiedergegeben, um das grundlegende Prinzip des erfindungsgemäßen Leitungsführungssystems 1 klarer darstellen zu können.

Wie den Figuren 1 und 2 unmittelbar entnehmbar, sind bei zwei miteinander gekoppelten Strängen 3.1, 3.2, wobei der erste Strang 3.1 hier in Abfolgerichtung vor dem zweiten Strang 3.2 angeordnet ist, der hintere Anschlusspunkt 2.2 des ersten Strangs 3.1 ortsfest zu dem vorderen Anschlusspunkt 2.1 des zweiten Strangs 3.2 angeordnet, da hier die in dem ersten Strang 3.1 geführten Leitungen an den zweiten Strang 3.2 übergeben werden. Wie ferner aus Figuren 1 und 2 entnehmbar, addieren sich die einzelnen Winkelbereiche der jeweils zusammengekoppelten Stränge 3.1, 3.2 zu einem Gesamtwinkelbereich, sodass dieser vorteilhaft groß dimensioniert ist.

Die beiden Trume 4.1, 4.2 der jeweiligen Stränge 3.1, 3.2 sind jeweils kreisbogenförmig geführt und ausgelegt, auch gegen Biegerichtung des Umlenkbogens 5 gebogen zu werden, wodurch bereits ein großer Drehwinkelbereich von ca. maximal 540° bis 600° erreichbar ist. Durch das Vorsehen der hintereinander gekoppelten Stränge 3.1, 3.2 kann dieser Drehwinkelbereich verdoppelt werden, wobei jedoch bei dem hier vorgestellten Ausführungsformen des Leitungsführungssystems 1 sich der Drehwinkelbereich auf insgesamt 950° aufsummiert.

Die beiden ersten Stränge 3.1 sowie die beiden zweiten Stränge 3.2 sind in dem Leitungsführungssystem 1 gegenläufig geführt. Das heißt, bezogen auf die erste Ausführungsform des Leitungsführungssystems 1 gemäß Fig. 1, dass, bezüglich beispielsweise der ersten Stränge 3.1, mit Verfahren ein erster Strang 3.1 unter Aufwicklung seines ersten Trums 4.1 und der andere erste Strang 3.1 gleichzeitig unter Abwicklung seines zweiten Trums 4.2 verfahren werden. Diese parallele Anordnung der ersten Stränge 3.1 bzw. zweiten Stränge 3.2 ist neben der vorteilhaften Verdopplung des bereitgestellten Querschnitts der Stränge 3.1, 3.2 zur Führung der Versorgungsleitungen günstig in Hinsicht auf die bezüglich der Drehachse symmetrische Kraftverteilung in dem Leitungsführungssystem 1.

Die Stränge 3.1, 3.2 sind mittels eines Führungssystems 6 bezüglich der Drehachse d kreisbogenförmig geführt. Hierzu weist das Führungssystem 6 eine erste Führungsrinne 7.1 für die ersten Stränge 3.1 und eine zweite Führungsrinne 7.2 für die zweiten Stränge 3.2 auf. Die Führungsrinnen 7.1, 7.2 werden mittels dreier bezüglich der Drehachse d relativ zueinander drehbewegbaren Führungseinheiten begrenzt, die bezüglich der Abfolgerichtung a als vordere Führungseinheit 8.1, mittlere Führungseinheit 8.2 und hintere Führungseinheit 8.3 bezeichnet werden. An der vorderen Führungseinheit 8.1 sind die ersten Stränge 3.1 jeweils mit ihrem vorderen Anschlusspunkt 2.1 festgelegt. An der mittleren Führungseinheit 8.2 sind die ersten Stränge 3.1 jeweils mit ihrem hinteren Anschlusspunkt 2.2 festgelegt, während die zweiten Stränge 3.2 umfänglich in gleicher Höhe zu den ersten Strängen 3.1 jeweils mit ihrem vorderen Anschlusspunkt 2.1 an der mittleren Führungseinheit 8.2 festgelegt sind. Die zweiten Stränge 3.2 sind schließlich jeweils mit ihrem hinteren Anschlusspunkt 2.2 an der hinteren Führungseinheit 8.3 festgelegt. Die vordere Führungseinheit 8.1 und hintere Führungseinheit 8.3 weisen jeweils zwei Anlageflächen, eine radiale Anlagefläche 9.1 und eine umfängliche Anlagefläche 9.2, für die jeweils zugeordneten Trume 4.1, 4.2 der jeweils zugeordneten Stränge 3.1, 3.2 auf. An diesen Anlageflächen 9.1, 9.2 werden die Trume 4,1, 4.2 abgelegt und gehalten, sodass die Trume 4,1, 4.2 unter Vermeidung von Reibungskräften keine Relativbewegung zu den Anlageflächen 9.1, 9.2 aufweisen.

Die Anlageflächen 9.1, 9.2 der vorderen Führungseinheit 8.1 und der hinteren Führungseinheit 8.3 begrenzen die erste Führungsrinne 7.1 radial außen bzw. die zweite Führungsrinne 7.2 radial innen. Sie weisen bezüglich der Anlageflächen 9.1, 9.2 einen L-förmigen Querschnitt auf (Figuren 3, 9 und 15). Die bezüglich der Abfolgerichtung a zwischen der vorderen Führungseinheit 8.1 und der hinteren Führungseinheit 8.3 angeordnete mittlere Führungseinheit 8.2 begrenzt beide Führungsrinnen 7.1, 7.2, d.h. die erste Führungsrinne 7.1. radial innen und die zweite Führungsrinne 7.2 radial außen. Sie weist demgemäß zwei radiale Anlageflächen 9.1 und zwei umfängliche Anlageflächen 9.2 auf, wobei sie bezüglich der Anlageflächen 9.1, 9.2 ein im Wesentlichen T-Querschnittsprofile mit einem die beiden umfänglichen Anlageflächen 9.2 aufweisenden Stammsteg 10 und einem die beiden radialen Anlageflächen 9.1 aufweisenden Quersteg 11 auf.
Die zueinander benachbarten Führungseinheiten 8.1, 8.2, 8.3 sind über einen Ringspalt 12 jeweils getrennt. In Überbrückung dieses Ringspaltes 12 verbindet der Umlenkbogen 5 eines jeden Strangs 3.1, 3.2 die Trume 4.1, 4.2 desselben, wobei der Umlenkbogen 5 um eine hier nicht eingezeichnete Achse parallel zur Drehachse d gebogen ist. Dies bedeutet, dass die Stränge 3.1, 3.2 jeweils nur im Bereich ihres Umlenkbogens 5 Reibungskräften ausgesetzt sind, die durch die Relativbewegungen der Führungseinheiten 8.1, 8.2, 8.3 entstehen. Bei den hier gezeigten Ausführungsformen des Leitungsführungssystems 1 ist jeweils die vordere Führungseinheit 8.1 mit einer Basis B drehfest verbunden.

In dem in den Figuren 1 bis 3 dargestellten Leitungsführungssystem 1 sind alle Führungseinheiten 8.1, 8.2, 8.3 in einer ersten Ebene E.1 senkrecht zur Drehachse d angeordnet, wobei diese Ebene E.1 in Fig. 2 gleich der Zeichenebene ist. Hierbei sind die vordere Führungseinheit 8.1 radial innen, die hintere Führungseinheit 8.3 radial außen und die mittlere Führungseinheit 8.2 zwischen den beiden auf der Basis B angeordnet, wobei die vordere Führungseinheit 8.1 mit der Basis B drehfest verbunden ist, während die beiden anderen Führungseinheiten 8.2, 8.3 drehbar auf der Basis B gelagert sind. Nicht dargestellt in den Figuren 1 bis 3 ist ein vorgesehenes Deckelelement, welches oberseitig auf die Führungsrinnen 7.1, 7.2 zur Abdeckung derselben aufmontiert wird. Das Deckelelement weist Konsolen 16 auf, an denen sich ein beispielhaft in Fig. 16 wiedergegebener Aufbau A stützen kann. Dieser Aufbau A wird unter Mitnahme der hinteren Führungseinheit 8.3 verdreht. Erreicht die hintere Führungseinheit 8.3 das Ende ihres vorschriftsgemäßen Drehwinkelbereichs, so wird die mittlere Führungseinheit 8.2 über vorgesehene zwischen der hinteren Führungseinheit 8.3 und der mittleren Führungseinheit 8.2 mittels als Mitnehmer wirksamen Anschlägen 13 mit weiterer Drehung des Aufbaus A bzw. der hinteren Führungseinheit 8.3 mitgenommen und relativ zur ersten Führungseinheit 8.1 verdreht, bis das Ende des vorschriftsgemäßen Drehwinkelbereichs zwischen der mittleren Führungseinheit 8.2 und der vorderen Führungseinheit 8.1 erreicht ist. Hier ist anstatt der Anschläge eine hier nicht weiter dargestellte Steuerung vorgesehen, die eine weitere Drehung in dieser Richtung blockiert. Die Anschläge 13 sind an der hinteren Führungseinheit 8.3 bzw. an der mittleren Führungseinheit 8.2 bezüglich der Drehachse d diametral angeordnet, so dass jeweils ein Anschlag 13 der hinteren Führungseinheit 8.3 einem Anschlag 13 der mittleren Führungseinheit zugeordnet ist. Zugeordnete Anschläge 13 sind jeweils in einer Höhe und nicht zugeordnete Anschläge so in unterschiedlicher Höhe zueinander angeordnet, sodass nicht zueinander zugeordnete Anschläge 13 bei der Drehung überfahren werden und einander zugeordnete Anschläge 13 gegeneinander anschlagen können. Damit ist der Drehwinkelbereich zwischen der vorderen Führungseinheit 8.1 und der mittleren Führungseinheit 8.2 auf ca. 360° begrenzt.
Die Basis B weist hier einen sternförmigen Aufbau mit drei axial zur Drehachse d aufgesetzten Kreisschienen 14 auf, wobei auf jeder der Kreisschienen 14 eine Führungseinheit 8.1, 8.2, 8.3 aufgesetzt ist. Deutlich der Fig. 3 entnehmbar, ist eine axiale Rollenlagerung 15.1 und radiale Rollenlagerung 15.2 mittels derer die mittlere Führungseinheit 8.2 und die hintere Führungseinheit 8.3 an den Kreisschienen 14 gelagert ist, während die vordere Führungseinheit 8.1 auf der ihr zugeordneten Kreisschiene 14 lagefixiert ist.
In Form von gestrichelten Bogensegmenten wird symbolhaft in Figur 2 angedeutet, dass das Leitungsführungssystem 1 unaufwendig um weitere durch zusätzliche hier nicht explizit gezeigte Führungseinheiten begrenzte Führungsrinnen, hier eine dritte Führungsrinne 7.3 und eine vierte Führungsrinne 7.4, modulartig erweitert werden kann, wobei in den Führungsrinnen 7.3, 7.4 jeweils mindesten ein hier nicht dargestellter Strang geführt ist.

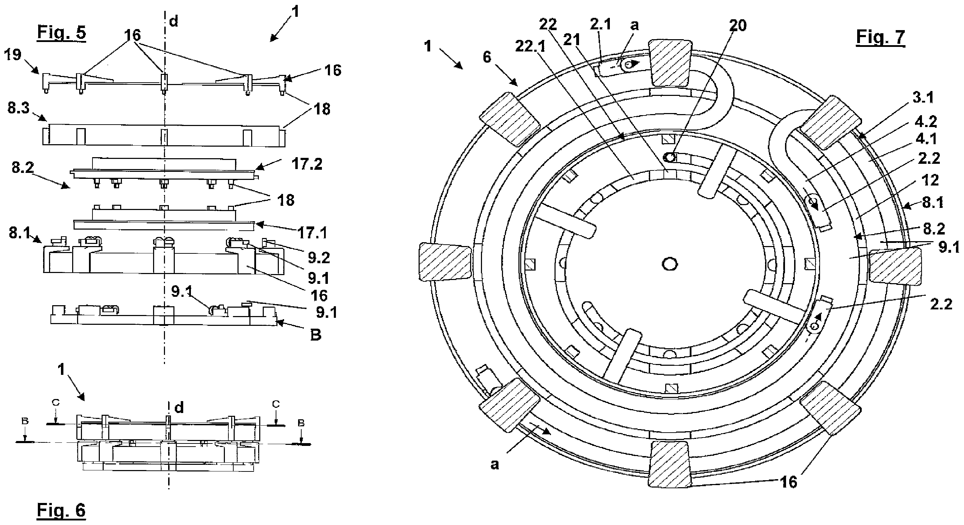

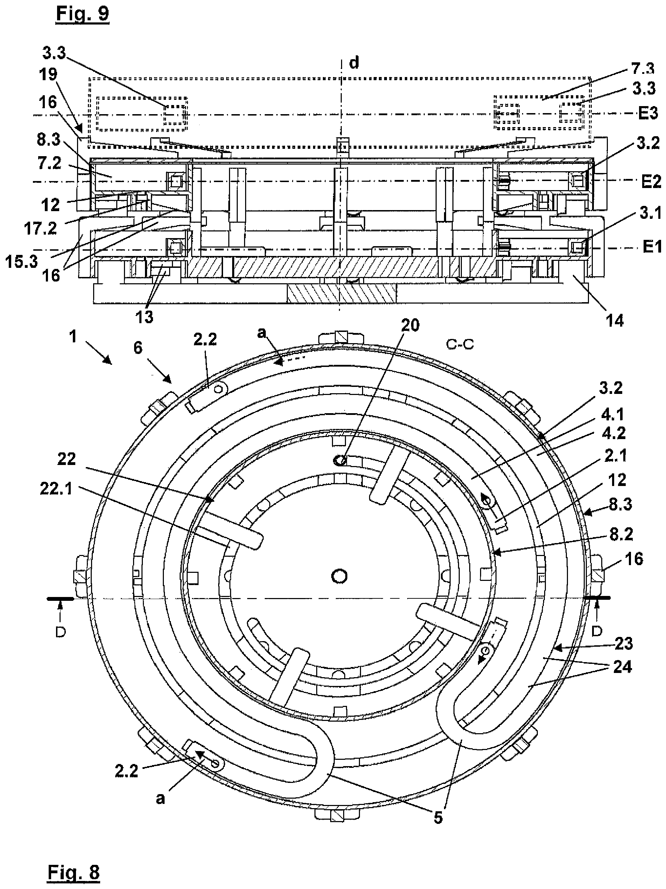

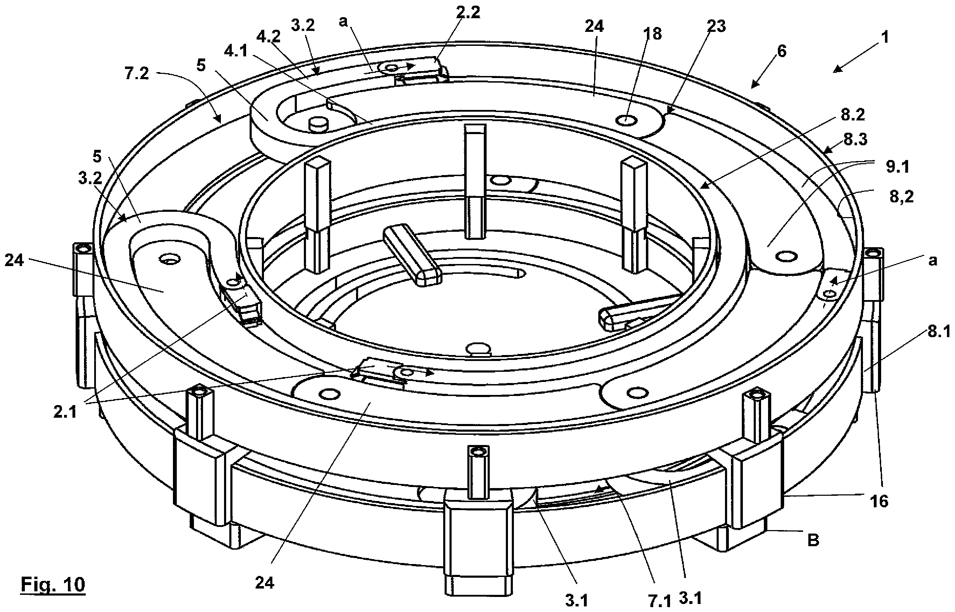

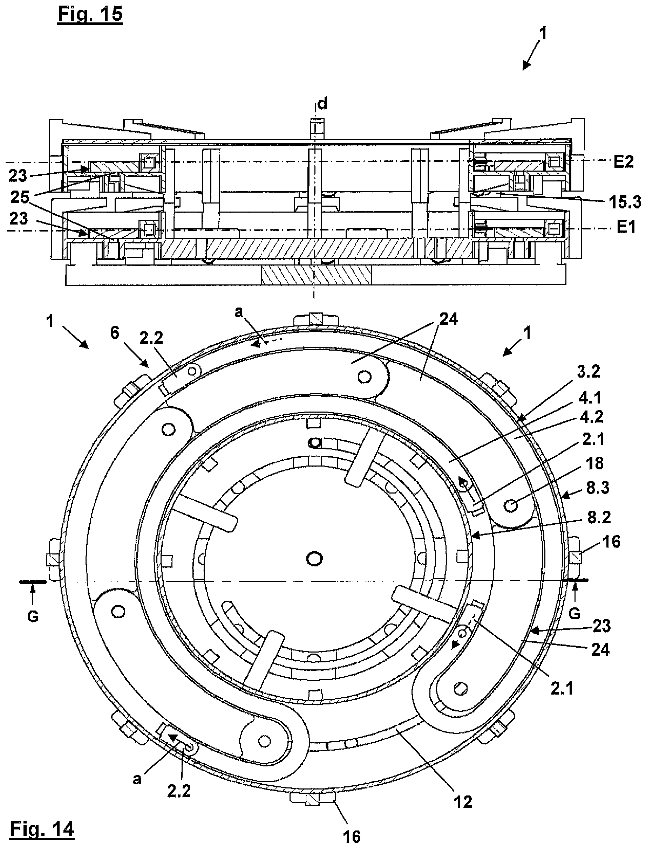

In den beiden Ausführungsformen des erfindungsgemäßen Leitungsführungssystems 1 gemäß den Figuren 4 bis 9 bzw. 10 bis 15 sind die Führungseinheiten in zwei axial beabstandeten Ebenen, in der ersten Ebene E.1 und einer zweiten Ebene E.2, senkrecht zur Drehachse d angeordnet (Figuren 9 und 15). Somit weist das Leitungsführungssystem 1 einen doppelstöckigen Aufbau auf, der deutlich in den Figuren 4 und 10 erkennbar ist. Hierbei sind die vordere Führungseinheit 8.1 in der ersten Ebene E.1 und die hintere Führungseinheit 8.3 in der zweiten Ebene E.2 jeweils radial außen angeordnet. Zur Überbrückung des axialen Abstands zwischen den beiden Ebenen E.1 und E.2 erstreckt sich die mittlere Führungseinheit 8.2 über beide Ebenen E.1, E.2. Hierbei begrenzt die mittlere Führungseinheit 8.2 mit der vordere Führungseinheit 8.1 in der ersten Ebene E.1 die erste Führungsrinne 7.1 für die beiden ersten Stränge 3.1, während die mittlere Führungseinheit 8.2 mit der hinteren Führungseinheit 8.3 in der zweiten Ebene E.2 die zweite Führungsrinne 7.2 für die beiden zweiten Stränge 3.2 begrenzt. Somit sind die hinteren Anschlusspunkte 2.2 der ersten Stränge 3.1 in der ersten Ebene E.1 an den Anlageflächen 9.1, 9.2 der mittleren Führungseinheit 8.2 festgelegt, während die vorderen Anschlusspunkte 2.1 der zweiten Stränge 3.2 in der zweiten Ebene E.2 an den dort vorgesehenen Anlageflächen 9.1, 9.2 der mittleren Führungseinheit 8.2 festgelegt sind. Da die Anschlusspunkte 2.1, 2.2 jeweils ortsfest zueinander an der mittleren Führungseinheit 8.2 festgelegt sind, können die hier nicht dargestellten Versorgungsleitungen in Überbrückung des axialen Abstands zwischen den beiden Ebene E.1, E.2 an der mittleren Führungseinheit 8.2 fest axial verlegt werden.
Anhand Figur 5, einer Explosionsdarstellung, kann der prinzipielle Aufbau der ersten Ausführungsform des Leitungsführungssystems 1 deutlich gemacht werden. Von unten nach oben ist unten die Basis B mit den Rollenlagerungen 15.1, 15.2 für die mittlere Führungseinheit 8.2 angeordnet, wobei die vordere Führungseinheit 8.1 mit den Konsolen 16 auf der Basis B aufgesteckt ist. Die Konsolen 16 tragen ihrerseits bezüglich der zweiten Ebene E2 Rollenlagerungen 15.1, 15.2 für die weiter oben angeordnete hintere Führungseinheit 8.3. und Gleitlagerung 15.3 für die mittlere Führungseinheit in der zweiten Ebene E.
Die mittlere Führungseinheit 8.2 ist in zwei nahezu baugleiche Hälften, eine unter Hälfte 17.1 und eine obere Hälfte 17.2 geteilt, die über eine Steckverbindung 18 ineinander steckbar sind. Somit ist die hintere Führungseinheit 8.3 drehbar auf der vorderen Führungseinheit 8.1 gelagert, während die mittlere Führungseinheit 8.2 mit ihrer unteren Hälfte 17.1 an der Basis B drehbar und mit ihrer oberen Hälfte 17.2 an der vorderen Führungseinheit 8.1 gleitverschieblich angelagert ist. Infolge der Anordnung der Führungsrinnen 7.1, 7.2 etwa zueinander fluchtend in zwei Ebenen E.1, E.2 wird die erste Führungsrinne 7.1 mittels der hinteren Führungseinheit 8.3 und der hier oberen Hälfte 17.2 der mittleren Führungseinheit 8.2 abgedeckt. Zur Abdeckung der zweiten Führungsrinne 7.2 ist ein Deckelelement 19 vorgesehen, das seinerseits mit umfänglich gleich beabstandet angeordneten Konsolen 16 zur Auflagerung des hier nicht gezeigten Aufbaus ausgestattet ist, wobei die Konsolen 16 über eine Steckverbindung 18 mit der hinteren Führungseinheit 8.3 verbunden sind.
Diese Explosionsdarstellung gemäß Figur 5 macht deutlich, wie einfach der Aufbau des Leitungsführungssystems 1 gestaltet ist, indem hier einzelne vorgefertigte Bauteile modular ineinander gesteckt werden können. Somit ist, allgemein und auch auf diese Ausführungsform bezogen, ein derartiges Modulsystem auch für mehr- und vielstöckige Ausführungsformen des Leitungsführungssystems geeignet. Ähnlich wie in Figur 2 ist diese Erweiterung der Leitungsführungssystems 1 auch hier durch gestrichelte Linien angedeutet, die die Weiterführung dieser Leitungsführungssystem 1 in eine dritte Ebene E.3 hinein symbolisieren soll. In der Logik des Aufbauprinzips erstreckt sich, was hier nicht explizit gezeigt ist, die hintere Führungseinheit bei dieser Ausführungsform des Leitungsführungssystem 1 in die dritte Ebene E3 hinein und bildet mit einer weiteren ebenfalls nicht dargestellten vierten Führungseinheit eine dritte Führungsrinne 7.3 aus, in der hier zwei dritte Stränge 3.3 verfahren werden.
Zur Begrenzung des Drehwinkelbereichs zwischen der vorderen Führungseinheit 8.1 und der mittleren Führungseinheit 8.2 relativ zueinander ist hier ein axialer Vorsprung 20 vorgesehen, der in einem an der Basis B vorgesehenen radialen Langloch 21 radial verschieblich gelagert ist und mit seinem Ende in eine mit der hier unteren Hälfte 17.1 der mittleren Führungseinheit 8.2 fest verbundenen Kulisse 22 mit einem spiralförmigen Langloch 22.1 eingreift, wobei der Vorsprung 20 endseitig des vorschriftsmäßigen Drehwinkelbereichs zwischen den beiden Führungseinheiten 8.1, 8.2 endseitig in dem spiralförmigen Langloch 22.1 anschlägt. Wie aus der Form des spiralförmigen Langlochs 22.1 unmittelbar entnehmbar, beträgt der Drehwinkelbereich hier etwa 600°. Die Begrenzung des Drehwinkelbereichs zwischen der mittleren Führungseinheit 8.2 und der hinteren Führungseinheit 8.3 ist hier ebenfalls über elektronische Steuerung vorgesehen, die hier nicht weiter dargestellt ist.

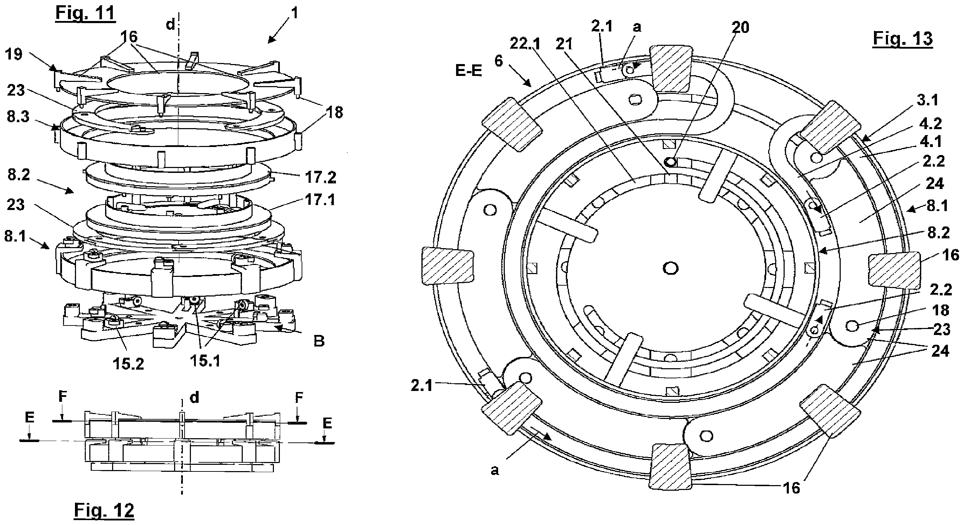

Die zweite Ausführungsform des Leitungsführungssystems 1 gemäß den Figuren 10 bis 13 unterscheidet sich zu der zuvor beschriebenen Ausführungsform des Leitungsführungssystems 1 gemäß den Figuren 4 bis 9 dadurch, dass hier zusätzlich zwischen den Trumen 4.1, 4.2 der ersten Stränge 3.1 und zwischen den Trumen 4,1, 4.2 der zweiten Stränge 3.2 jeweils ein Abstandskörper 23 zur Beabstandung der Trume 4,1, 4.2 und zur vorschriftsgemäßen Ausbildung des jeweils zugeordneten Umlenkbogens 5 angeordnet ist. Das Vorsehen derartiger Abstandskörper 23 ist insbesondere dann sinnvoll, wenn die konstruktiven Ausmaße des Leitungsführungssystems 1 größere Abmessungen erreichen, während sie bei kleinen Leitungsführungssystemen nicht unbedingt erforderlich sind. Die Abstandskörper 23 weisen jeweils, wie Fig. 11 beispielsweise entnehmbar, eine geöffnete Kreisringform auf und sind kettenartig mit einzelnen Ringabschnitten 24 als Kettenglieder aufgebaut. Diese Ringabschnitte 24 werden hier endseitig über eine Steckverbindung 18 miteinander verbunden. Die Ringabschnitte 24 können zum Aufbau des Abstandskörpers 23 sukzessiv in ihre jeweils vorgesehene Führungsrinne 7.1, 7.2 eingelegt und endseitig über die Steckverbindung 18 verbunden werden. Wie den Figuren 13 und 14, jeweils eine Querschnittsansicht, entnehmbar, ist der Abstandskörper 23 mit Spiel zwischen den Trumen 4,1, 4.2 und den Umlenkbögen 5 angeordnet, um hier eine möglichst geringe Reibung zwischen dem Abstandskörper 23 und den jeweiligen Strängen 3.1, 3.2 bzw. Umlenkbögen 5 zu erzeugen.
Die Abstandskörper 23 sind jeweils in der Führungsrinne 7.1, 7.2 geführt angeordnet. Hierzu weisen die Ringsabschnitte 24 unterseitig jeweils einen kreisbogenartigen Führungsvorsprung 25 auf, der in den Ringspalt 12 zwischen den Führungseinheiten 7.1, 7.2, 7.3 eingreift.

In den Figuren 16 bis 18 soll beispielhaft deutlich gemacht werden, wie ein erfindungsgemäßes Leitungsführungssystem 1 in eine größere Maschinenanlage M mit Basis B und Aufbau A integriert werden kann. Von der Maschinenanlage M selbst ist lediglich ein unterer Bereich dargestellt, der somit lediglich einen Unterbau für einen weiteren Aufbau darstellt. Er weist, wie anhand einer seitlich angeflanschten Treppe ersichtlich, relativ große Ausmaße auf. Die Maschinenanlage M kann ein Unterbau für beispielsweise einen Schwimmkran sein.

Die hier gezeigte dritte Ausführungsform des Leitungsführungssystems 1 ist zwischen der Basis B und dem Aufbau A angeordnet, wobei der Aufbau A zur besseren Darstellung des Leitungsführungssystems 1 gegenüber dem Leitungsführungssystem 1 angehoben ist. Deutlich erkennbar sind die Konsolen 16, auf denen der Aufbau A in Einbaulage ruht und die damit Teil einer vorgesehenen Anschlussvorrichtung S zum Einbau oder Anschluss des Leitungsführungssystem 1 in bzw. an einen Maschinenaufbau (M) sind.
In Fig. 17 sind ein Querschnitt gemäß dem Querschnittsverlauf H-H in Fig. 16 mit Draufsicht auf das Leitungsführungssystem 1 gezeigt. Ferner ist ein Schnittverlauf I-I eingezeichnet, der durch eine der Konsolen 16 gelegt ist und in Fig. 18 wiedergegeben ist. In Fig. 18 ist der prinzipielle Aufbau dieser in der Maschinenanlage M eingebauten Ausführungsform des Leitungsführungssystems 1 deutlich erkennbar. Auch hier sind zwei Führungsrinnen 7.1, 7.2 jeweils in einer Ebene E.1, E.2 vorgesehen, wobei in der ersten Führungsrinne 7.1 die ersten Stränge 3.1 und in der zweiten Führungsrinne 7.2 die zweiten Stränge 3.2 verfahren werden. Somit ähnelt die dritte Ausführungsform des Leitungsführungssystems 1 vom prinzipiellen Aufbau her der ersten Ausführungsform des Leitungsführungssystems 1 gemäß den Figuren 4 bis 9. In der dritten Ausführungsform des Leitungsführungssystems 1 weisen die Stränge 3.1, 3.2 jedoch wesentliche größere Querschnitte auf, wobei diese eine längliche Form aufweisen und die Stränge 3.1, 3.2 so in die Führungsrinnen 7.1, 7.2 eingesetzt sind, dass, vorteilhaft bezüglich der auftretenden Reibungskräfte, die Stränge 3.1, 3.2 jeweils mit ihrer kürzeren Seite auf der radialen Anlageflächen 9.1 der jeweiligen Führungseinheit 8.1, 8.2, 8.3 anliegen, so dass beim Verfahren zwischen Umlenkbögen der ersten Stränge 3.1 und zweiten Stränge 3.3 auftretende Reibungskräfte minimiert werden können. Die Stränge 3.1, 3.2 sind hier jeweils als Leitungsführungskette 26 mit Kettengliedern 27 ausgebildet, die parallel zur Drehachse d verschwenkbar in dem Leitungsführungssystem 1 angeordnet sind.

Ersichtlich an diesem Längsschnitt ist auch der Aufbau der Konsolen 16, die übereinander angeordnet sind, um hierüber die von dem Aufbau A ausgeübten Druckkräfte auf die Basis B zu übertragen. Ferner ist als Teil der Anschlussvorrichtung S ein radial innen liegender Anschlussflansch F zum Anbau an der Maschinenanlage M vorgesehen.

### Bezugszeichenliste

- 1: Leitungsführungssystem
- 2.1: vorderer Anschlusspunkt
- 2.2: hinterer Anschlusspunkt
- 3.1: erster Strang
- 3.2: zweiter Strang
- 3.3: dritter Strang
- 4.1: erstes Trum
- 4.2: zweites Trum
- 5: Umlenkbogen
- 6: Führungssystem
- 7.1: erste Führungsrinne
- 7.2: zweite Führungsrinne
- 7.3: dritte Führungsrinne
- 7.4: vierte Führungsrinne
- 8.1: vordere Führungseinheit
- 8.2: mittlere Führungseinheit
- 8.3: hintere Führungseinheit
- 9.1: radiale Anlagefläche
- 9.2: umfängliche Anlagefläche
- 10: Stammsteg
- 11: Quersteg
- 12: Ringspalt
- 13: Anschlag
- 14: Kreisschiene
- 15.1: axiale Rollenlagerung
- 15.2: radiale Rollenlagerung
- 15.3: Gleitlagerung
- 16: Konsolen
- 17.1: untere Hälfte
- 17.2: obere Hälfte
- 18: Steckverbindung
- 19: Deckelelement
- 20: Vorsprung
- 21: Langloch
- 22: Kulisse
- 22.1: Langloch
- 23: Abstandskörper
- 24: Ringabschnitt
- 25: Führungsvorsprung
- 26: Leitungsführungskette
- 27: Kettenglied
- a: Abfolgerichtung
- d: Drehachse
- A: Aufbau
- B: Basis
- E.1: erste Ebene
- E.2: zweite Ebene
- E.3: dritte Ebene
- F: Anschlussflansch
- M: Maschinenanlage
- S: Anschlussvorrichtung
- T: Treppe

## Patentansprüche

1. Leitungsführungssystem (1) zur Aufnahme und Führung von Versorgungsleitungen zwischen zwei in einer Kreisbewegung bezüglich einer Drehachse (d) über einen Drehwinkelbereich relativ zueinander beweglichen Anschlusspunkten (2.1, 2.2), wobei das Leitungsführungssystem(1) einen mit den Anschlusspunkten (2.1, 2.2) gekoppelten länglichen Strang (3.1, 3.2, 3.3) aufweist, an oder in dem die Versorgungsleitungen geführt anordenbar sind, und der Strang (3.1, 3.2., 3.3) unter Ausbildung eines ersten Trums (4.1), eines zweiten Trums (4.2) und eines das erste und zweite Trum miteinander verbindenden Umlenkbogens (5) über einen Kreisbogen geführt innerhalb des Drehwinkelbereichs hin und her verfahrbar ist, wobei mindestens zwei Stränge, ein erster Strang (3.1) und ein zweiter Strang (3.2), vorgesehen sind, die hintereinander gekoppelt angeordnet sind, die Anschlusspunkte (2.1, 2.2, 2.3) der Stränge (3.1, 3.2, 3.3) bezüglich einer Abfolgerichtung (a) von dem ersten Strang (3.1) zu dem zweiten Strang (3.2) hin als vorderer Anschlusspunkt (2.1) und hinterer Anschlusspunkt (2.2) ausgebildet sind, wobei der hintere Anschlusspunkt (2.2) des ersten Strangs (3.1) ortsfest zu dem vorderen Anschlusspunkt (2.1) des zweiten Strangs (3.2) angeordnet ist und zur Führung der Stränge (3.1, 3.2, 3.3) ein Führungssystem (6) mit drei bezüglich der Drehachse (d) relativ zueinander drehbewegbaren Führungseinheiten, bezüglich der Abfolgerichtung (a) eine vordere Führungseinheit (8.1), eine mittlere Führungseinheit (8.2) und eine hintere Führungseinheit (8.3), vorgesehen ist, wobei an der vorderen Führungseinheit (8.1) der vordere Anschlusspunkt (2.1) des ersten Strangs (3.1), an der mittleren Führungseinheit (8.2) der hintere Anschlusspunkt (2.2) des ersten Strangs (3.1) und der vordere Anschlusspunkt (2.1) des zweiten Strangs (3.2) und an der hinteren Führungseinheit (8.3) der hintere Anschlusspunkt (2.2) des zweiten Strangs (3.2) festgelegt ist, **dadurch gekennzeichnet, dass** die Führungseinheiten (8.1, 8.2, 8.3) in zwei axial beabstandeten Ebenen, das heißt einer ersten Ebene (E.1) und einer zweiten Ebene (E.2), senkrecht zur Drehachse (d) angeordnet sind.

2. Leitungsführungssystem nach Anspruch 1, **dadurch gekennzeichnet, dass** die Stränge (3.1, 3.2, 3.3) bezüglich der Drehachse (d)radial oder axial beabstandet zueinander angeordnet sind.

3. Leitungsführungssystem nach Anspruch 1 oder 2, **dadurch gekennzeichnet, dass** die vordere Führungseinheit (8.1) ortsfest an einer Basis (B) angeordnet ist.

4. Leitungsführungssystem nach einem der Ansprüche 1 bis 3, **dadurch gekennzeichnet, dass** die Führungseinheiten (8.1, 8.2, 8.3) für jedes ihnen zugeordnete Trum (4.1, 4.2) zur Führung desselben auf Kreisbögen jeweils kreisringartige Anlageflächen, eine umfängliche Anlagefläche (9.2) und eine radiale Anlagefläche (9.1), aufweist.

5. Leitungsführungssystem nach Anspruch 4, **dadurch gekennzeichnet, dass** die für die beiden Trume (4.1, 4.2) eines Strangs (3.1, 3.2, 3.3) vorgesehenen Anlageflächen (9.1, 9.2) zur Drehachse (d) koaxial und radial beabstandet zueinander angeordnet sind, wobei der Umlenkbogen (5) die radiale Beabstandung der Anlageflächen von der einen Führungseinheit (8.1, 8.2, 8.3) für das erste Trum (4.1) dieses Strangs (3.1, 3.2, 3.3) zu der Führungseinheit (8.2, 8.3, 8.1) für das zweite Trum (4.2) dieses Strangs überbrückt.

6. Leitungsführungssystem nach Anspruch 5, **dadurch gekennzeichnet, dass** die für die beiden Trume (4.1, 4.2) eines Strangs (3.1, 3.2, 3.3) vorgesehenen Anlageflächen (9.1, 9.2) eine Führungsrinne (7.1, 7.2, 7.3) für diesen Strang (3.1, 3.2, 3.3) begrenzen.

7. Leitungsführungssystem nach Anspruch 6, **dadurch gekennzeichnet, dass** der Anschlusspunkt (2.1, 2.2) eines Trums (4.1, 4.2) jeweils an der diesem Trum (4.1, 4.2) zugeordneten radialen Anlagefläche (9.1) festgelegt ist.

8. Leitungsführungssystem nach Anspruch 3, **dadurch gekennzeichnet, dass** die mittlere Führungseinheit (8.2) und hintere Führungseinheit (8.3) an der Basis (B) drehbeweglich gelagert sind.

9. Leitungsführungssystem nach einem der Ansprüche 1 bis 8, **dadurch gekennzeichnet, dass** die vordere Führungseinheit (F.1) in der ersten Ebene (E.1) und die hintere Führungseinheit (8.3) in der zweiten Ebene (E.2) sowie die mittlere Führungseinheit (8.2) in Überbrückung der axialen Beabstandung der Ebenen (E.1, E.2)in beiden Ebenen (E.1, E.2) so angeordnet ist, dass der hintere Anschlusspunkt (2.2) des ersten Strangs (3.1) in der ersten Ebene (E.1) und der vordere Anschlusspunkt (2.2) des zweiten Strangs (3.2) in der zweiten Ebene (E2) an der mittleren Führungseinheit (8.2) festgelegt ist.

10. Leitungsführungssystem nach einem der Ansprüche 1 bis 9 , **dadurch gekennzeichnet, dass** die vordere Führungseinheit (8.1) auf einer Basis (B) lagefixiert ist und die mittlere Führungseinheit (8.2) auf der Basis (B) und hintere Führungseinheit (8.3) auf der vorderen Führungseinheit (8.1) drehbeweglich gelagert sind.

11. Leitungsführungssystem nach einem der Ansprüche 1 bis 10, **dadurch gekennzeichnet, dass** der Drehwinkelbereich der Stränge (3.1, 3.2, 3.3) anschlagsbegrenzt und/oder antriebsbegrenzt sind.

12. Leitungsführungssystem nach einem der Ansprüche 1 bis 11, **dadurch gekennzeichnet, dass** zumindest für einen Strang (3.1, 3.2, 3.3) ein Abstandskörper (23) zur Beabstandung seiner Trume (4.1, 4.2) vorgesehen ist, der zwischen den Trumen (4.1, 4.2) und innenseitig des Umlenkbogens (5) angeordnet ist und mit dem Verfahren dieses Strangs (3.1, 3.2, 3.3) gekoppelt ist.

13. Leitungsführungssystem nach einem der Ansprüche 1 bis 12, **dadurch gekennzeichnet, dass** zwei erste Stränge (3.1) und/oder zwei zweite Stränge (3.2) vorgesehen sind, wobei die ersten Stränge (3.1) bzw. die zweiten Stränge (3.2) jeweils in einer Ebene (E.1, E.2, E.3) und in dieser gegenläufig zueinander verfahrbar angeordnet sind.

14. Leitungsführungssystem nach Anspruch 13, **dadurch gekennzeichnet, dass** für die ersten Stränge (3.1) und/oder die zweiten Stränge (3.2) jeweils ein Abstandskörper (23) vorgesehen ist, der teilumfänglich zwischen den Trumen (4.1, 4.2) der ersten Stränge (3.1) bzw. der zweiten Stränge (3.2) sowie endseitig innenseitig an den Umlenkbögen (5) der ersten Stränge (3.1) bzw. der zweiten Stränge (3.2) mit Spiel anliegend angeordnet ist.

15. Leitungsführungssystem einem der Ansprüche 12 bis 14, **dadurch gekennzeichnet, dass** der Abstandskörper (23) als Kette mit Kettengliedern ausgebildet ist, die parallel zur Drehachse (d) verschwenkbar zueinander in dem Leitungsführungssystem (1) geführt angeordnet sind.

## Claims

1. A line guide system (1) for receiving and guiding supply lines between two connection points (2.1, 2.2) which are movable relative to each other in a circular movement with respect to a rotary axis (d) over a rotary angle range, wherein the line guide system (1) has an elongate strand (3.1, 3.2, 3.3) which is coupled to the connection points (2.1, 2.2) and at or in which the supply lines can be arranged in guided relationship, and the strand (3.1, 3.2, 3.3) is reciprocatingly displaceable guidedly over a circular arc within the rotary angle range, forming a first run (4.1), a second run (4.2) and a deflection arc (5) connecting the first and second runs together, wherein at least two strands are provided, a first strand (3.1) and a second strand (3.2), which are arranged coupled one behind the other, the connection points (2.1, 2.2, 2.3) of the strands (3.1, 3.2, 3.3) are in the form of a front connection point (2.1) and a rear connection point (2.2) with respect to a direction of succession (a) from the first strand (3.1) towards the second strand (3.2), wherein the rear connection point (2.2) of the first strand (3.1) is arranged stationarily relative to the front connection point (2.1) of the second strand (3.2) and wherein for guiding the strands (3.1, 3.2, 3.3) there is provided a guide system (6) having three guide units which are rotationally movable relative to each other with respect to the rotary axis (d), with respect to the direction of succession (a) a front guide unit (8.1), a central guide unit (8.2) and a rear guide unit (8.3), wherein the front connection point (2.1) of the first strand (3.1) is fixed to the front guide unit (8.1), the rear connection point (2.2) of the first strand (3.1) and the front connection point (2.1) of the second strand (3.2) is fixed to the central guide unit (8.2) and the rear connection point (2.2) of the second strand (3.2) is fixed to the rear guide unit (8.3) **characterised in that** the guide units (8.1, 8.2, 8.3) are arranged in two axially spaced planes, that means a first plane (E.1) and a second plane (E.2), perpendicularly to the axis of rotation (d).

2. A line guide system according to claim 1 **characterised in that** the strands (3.1, 3.2, 3.3) are arranged spaced relative to each other axially or radially with respect to the rotary axis (d).

3. A line guide system according to claim 1 or claim 2 **characterised in that** the front guide unit (8.1) is arranged stationarily on a base (B).

4. A line guide system according to one of claims 1 to 3 **characterised in that** the guide units (8.1, 8.2, 8.3) for each run (4.1, 4.2) associated with them, for guidance thereof on circular arcs, have respective circular ring-like contact surfaces, a peripheral contact surface (9.2) and a radial contact surface (9.1).

5. A line guide system according to claim 4 **characterised in that** the contact surfaces (9.1, 9.2) provided for the two runs (4.1, 4.2) of a strand (3.1, 3.2, 3.3) are arranged spaced relative to each other coaxially and radially relative to the rotary axis (d), wherein the deflection arc (5) bridges over the radial spacing of the contact surfaces from the one guide unit (8.1, 8.2, 8.3) for the first run (4.1) of said strand (3.1, 3.2, 3.3) to the guide unit (8.2, 8.3, 8.1) for the second run (4.2) of said strand.

6. A line guide system according to claim 5 **characterised in that** the contact surfaces (9.1, 9.2) provided for the two runs (4.1, 4.2) of a strand (3.1, 3.2, 3.3) delimit a guide channel (7.1, 7.2, 7.3) for said strand (3.1, 3.2, 3.3).

7. A line guide system according to claim 6 **characterised in that** the connection point (2.1, 2.2) of a run (4.1, 4.2) is respectively fixed to the radial contact surface (9.1) associated with said run (4.1, 4.2).

8. A line guide system according to claim 3 **characterised in that** the central guide unit (8.2) and the rear guide unit (8.3) are mounted rotationally movably on the base (B).

9. A line guide system according to one of claims 1 to 8 **characterised in that** the front guide unit (F.1) is arranged in the first plane (E.1) and the rear guide unit (8.3) is arranged in the second plane (E.2) and the central guide unit (8.2) is arranged in bridging relationship of the axial spacing of the planes (E.1, E.2) in both planes (E.1, E.2) in such a way that the rear connection point (2.2) of the first strand (3.1) in the first plane (E.1) and the front connection point (2.2) of the second strand (3.2) in the second plane (E.2) is fixed to the central guide unit (8.2).

10. A line guide system according to one of claims 1 to 9 **characterised in that** the front guide unit (8.1) is fixed in position on a base (B) and the central guide unit (8.2) is rotationally movably mounted on the base (B) and the rear guide unit (8.3) is rotationally movably mounted on the front guide unit (8.1).

11. A line guide system according to one of claims 1 to 10 **characterised in that** the rotary angle range of the strands (3.1, 3.2, 3.3) is abutment-limited and/or drive-limited.

12. A line guide system according to one of claims 1 to 11 **characterised in that** provided at least for one strand (3.1, 3.2, 3.3) is a spacer body (23) for spacing its runs (4.1, 4.2), which spacer body is arranged between the runs (4.1, 4.2) and on the inside of the deflection arc (5) and is coupled to the displacement of said strand (3.1, 3.2, 3.3).

13. A line guide system according to one of claims 1 to 12 **characterised in that** there are provided two first strands (3.1) and/or two second strands (3.2), wherein the first strands (3.1) and the second strands (3.2) are respectively arranged in a plane (E.1, E.2, E.3) and displaceably in opposite relationship therein relative to each other.

14. A line guide system according to claim 13 **characterised in that** provided for the first strands (3.1) and/or the second strands (3.2) is a respective spacer body (23) which in part-peripheral relationship is arranged between the runs (4.1, 4.2) of the first strands (3.1) and the second strands (3.2) respectively and at the end on the inside bearing with play against the deflection arcs (5) of the first strands (3.1) and the second strands (3.2) respectively.

15. A line guide system according to one of claims 12 to 14 **characterised in that** the spacer body (23) is in the form of a chain with chain link members which are arranged guided in the line guide system (1) pivotably relative to each other in parallel relationship with the rotary axis (d).

## Revendications

1. Système de guidage de câbles (1) destiné à recevoir et guider des conduites d'alimentation entre deux points de raccordement (2.1, 2.2) mobiles l'un par rapport à l'autre suivant un mouvement circulaire par rapport à un axe de rotation (d) dans une plage d'angle de rotation, le système de guidage (1) comportant un brin allongé (3.1, 3.2, 3.3) couplé aux points de raccordement (2.1, 2.2), sur ou dans ce brin peuvent être disposées les conduites d'alimentation de manière guidée, et le brin (3.1, 3.2, 3.3) pouvant être déplacé va-et-vient à l'intérieur de la plage d'angle de rotation de manière guidée via un arc de cercle en formant une première partie de brin (4.1) et une deuxième partie de brin (4.2) et un arc de renvoi (5), au moins deux brins étant prévus, un premier brin (3.1) et un deuxième brin (3.2) disposés de manière accouplée l'un derrière l'autre, des points de raccordement (2.1, 2.2, 2.3) des brins (3.1, 3.2, 3.3) étant configurés comme un point de raccordement avant (2.1) et un point de raccordement arrière (2.2) par rapport à un sens de succession (a) du premier brin (3.1) vers le deuxième brin (3.2), le point de raccordement arrière (2.2) du premier brin (3.1) étant disposé fixe par rapport au point de raccordement avant (2.1) du deuxième brin (3.2) et un système de guidage (6) étant prévu pour guider les brins (3.1, 3.2, 3.3) et comportant trois unités de guidage mobiles l'une à l'autre par rapport à l'axe de rotation (d), à savoir, par rapport au sens de succession (a), une unité de guidage avant (8.1), une unité de guidage centrale (8.2) et une unité de guidage arrière (8.3), à l'unité de guidage avant (8.1) étant fixé le point de raccordement avant (2.1) du premier brin (3.1), à l'unité de guidage centrale (8.2) étant fixé le point de raccordement arrière (2.2) du premier brin (3.1) et le point de raccordement (2.1) du deuxième brin (3.2) et à l'unité de guidage arrière (8.3) étant fixé le point de raccordement arrière (2.2) du deuxième brin (3.2), **caractérisé en ce que** les unités de guidage (8.1, 8.2, 8.3) sont disposés perpendiculairement à l'axe de rotation dans deux plans axialement écartés, c'est-a-dire dans un premier plan (E.1) et un deuxième plan (E.2).

2. Système de guidage de câbles selon la revendication 1, **caractérisé en ce que** les brins (3.1, 3.2, 3.3) sont disposés espacés radialement ou axialement l'un à l'autre par rapport à l'axe de rotation (d).

3. Système de guidage de câbles selon la revendication 1 ou 2, **caractérisé en ce que** l'unité de guidage avant (8.1) est disposée fixe sur une base (B).

4. Système de guidage de câbles selon l'une des revendications 1 à 3, **caractérisé en ce que** les unités de guidage (8.1, 8.2, 8.3) comportent pour chaque partie de brin (4.1, 4.2) qui leur sont associées des surfaces d'appui en forme d'anneau pour guider la partie de brin respective sur des arcs de cercle, à savoir une surface d'appui périphérique (9.2) et une surface d'appui radiale (9.1).

5. Système de guidage de câbles selon la revendication 4, **caractérisé en ce que** les surfaces d'appui (9.1, 9.2) prévues pour les deux parties de brin (4.1, 4.2) d'un brin (3.1, 3.2, 3.3) sont disposées coaxialement et radialement espacées l'une à l'autre par rapport à l'axe de rotation (d), l'arc de renvoi (5) pontant l'espacement radial des surfaces d'appui de l'une des unités de guidage (8.1, 8.2, 8.3) pour la première partie de brin (4.1) de ce brin (3.1, 3.2, 3.3) à l'unité de guidage (8.2, 8.3, 8.1) pour le deuxième partie de brin (4.2) de ce brin.

6. Système de guidage de câbles selon la revendication 5, **caractérisé en ce que** les surfaces d'appui (9.1, 9.2) prévues pour les deux parties de brin (4.1, 4.2) d'un brin (3.1, 3.2, 3.3) définissent une rainure de guidage (7.1, 7.2, 7.3) pour ce brin (3.1, 3.2, 3.3).

7. Système de guidage de câbles selon la revendication 6, **caractérisé en ce que** le point de raccordement (2.1, 2.2) d'une partie de brin (4.1, 4.2) est respectivement fixé sur la surface d'appui radiale (9.1) associée à cette partie de brin (4.1, 4.2).

8. Système de guidage de câbles selon la revendication 3, **caractérisé en ce que** l'unité de guidage centrale (8.2.) et l'unité de guidage arrière (8.3) sont montées mobile en rotation sur la base (B).

9. Système de guidage de câbles selon l'une des revendications 1 à 8, **caractérisé en ce que** l'unité de guidage avant (F.1) et l'unité de guidage arrière (8.3) sont disposées dans le premier plan (E.1) et dans le deuxième plan (E.2) et l'unité de guidage centrale (8.2) est disposée dans les deux plans (E.1, E.2) en pontant l'espacement axial des plans (E.1, E.2) de sorte que le point de raccordement arrière (2.1) du premier brin (3.1) et le point de raccordement avant (2.2) du deuxième brin (3.2) sont fixés sur l'unité de guidage centrale (8.2) dans le premier plan (E.1) et le deuxième plan (E.2).

10. Système de guidage de câbles selon l'une des revendications 1 à 9, **caractérisé en ce que** l'unité de guidage avant (8.1) est fixée en position sur une base (B) et l'unité de guidage centrale (8.2) et l'unité de guidage arrière (8.3) sont respectivement montées mobile en rotation sur la base (B) et sur l'unité de guidage avant (8.1).

11. Système de guidage de câbles selon l'une des revendications 1 à 10, **caractérisé en ce que** la plage d'angle de rotation des brins (3.1, 3.2, 3.3) est limitée par butée et/ou limitée en entraînement.

12. Système de guidage de câbles selon l'une des revendications 1 à 11, **caractérisé en ce qu'**est prévu un élément d'écartement (23) pour au moins un des brins (3.1, 3.2, 3.3) pour écarter ses parties de brin (4.1, 4.2), ledit élément d'écartement étant disposé entre les parties de brin (4.1, 4.2) et à l'intérieur de l'arc de renvoi (5) et étant couplé avec le déplacement de ce brin (3.1, 3.2, 3.3).

13. Système de guidage de câbles selon l'une des revendications 1 à 12, **caractérisé en ce que** sont prévus deux premiers brins (3.1) et/ou deux deuxièmes brins (3.2), les premiers brins (3.1) ou les deuxièmes brins (3.2) respectivement étant disposés dans un plan (E.1, E.2, E.3) de sorte que ceux-ci peuvent être déplacés en sens inversé l'un à l'autre.

14. Système de guidage de câbles selon la revendication 13, **caractérisé en ce qu'**est respectivement prévu un élément d'écartement (23) pour les premiers brins (3.1) et/ou les deuxièmes brins (3.2), ledit élément d'écartement étant disposé sur une partie du pourtour entre les parties de brin (4.1, 4.2) des premiers brins (3.1) ou des deuxièmes brins (3.2) ainsi qu'à l'intérieur et aux extrémités des arcs de renvoi (5) des premiers brins (3.1) ou des deuxièmes brins (3.2) de façon à être adjacentes à ceux-ci avec jeu.

15. Système de guidage de câbles selon l'une des revendications 12 à 14, **caractérisé en ce que** l'élément d'écartement (23) est réalisé sous forme de chaîne à chainons disposés guidés dans le système de guidage de câbles de parallèlement à l'axe de rotation (d) et de façon pivotante l'un par rapport à l'autre.
